# EUROPEAN PATENT APPLICATION

(11) **EP 4 366 423 A1**
(43) Date of publication of application: **08.05.2024**
(21) Application number: 22851902.1
(22) Date of filing: 20.07.2022
(51) Int. Cl.: H04W 72/04, H04W 36/00

(54) **COMMUNICATION METHOD AND APPARATUS**

(30) Priority: 06.08.2021 CN 202110902490
(71) Applicant: Huawei Technologies Co., Ltd., Shenzhen, Guangdong 518129 (CN)
(72) Inventor: YUAN, Shitong, Shenzhen, Guangdong 518129 (CN); ZHANG, Xi, Shenzhen, Guangdong 518129 (CN); FAN, Bo, Shenzhen, Guangdong 518129 (CN)
(74) Representative: MERH-IP Matias Erny Reichl Hoffmann Patentanwälte PartG mbB
(86) International application number: PCT/CN2022/106808
(87) International publication number: WO 2023/011188

(57) **Abstract**

A communication method and apparatus are provided, to improve cross-cell beam indication performance. The method is includes: A network device generates first information and sends the first information to a terminal device, where the first information indicates to activate a first transmission configuration indicator TCI state of a target cell and indicates whether to change a serving cell; and the terminal device receives the first information, activates the first TCI state of the target cell based on the first information, and determines, based on the first information, whether to change the serving cell. In cross-cell beam switching scenarios, handover of a serving cell needs to be performed in some scenarios, while handover of the serving cell does not need to be performed in some other scenarios. When receiving a beam switching indication, the terminal device cannot determine whether cell handover needs to be performed. The terminal device can perform beam switching based on an indication of the network device and determine, based on the indication of the network device, whether to change the serving cell, to improve the cross-cell beam indication performance.

## Description

### CROSS-REFERENCE TO RELATED APPLICATIONS

This application claims priority to Chinese Patent Application No. 202110902490.4, filed with the China National Intellectual Property Administration on August 6, 2021 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In a mobile communication system, a beamforming (beamforming) technology is usually used for high-frequency communication. In the beamforming technology, signals may be focused in one direction for transmission, to increase a transmission distance and compensate for a path loss. A network device and a terminal device communicate with each other through a beam. In a serving cell, the network device may send a plurality of beams in different directions in a time division or space division manner, and the terminal device may perform beam switching in the cell, to obtain a better beam gain. The network device may send a beam switching indication to the terminal device, and the terminal device implements beam switching in the serving cell according to the beam switching indication.

In some scenarios, the terminal device may need to receive data through a beam of another cell other than the serving cell. In this case, the network device needs to perform cross-cell beam indication. Currently, cross-cell beam indication performance further needs to be improved.

### SUMMARY

This application provides a communication method and apparatus, to improve cross-cell beam indication performance.

According to a first aspect, a communication method is provided. The method may be performed by a terminal device, or may be performed by a component of the terminal device. The method may be implemented in the following steps: receiving first information, where the first information indicates to activate a first transmission configuration indicator TCI state of a target cell and indicates whether to change a serving cell; and activating the first TCI state of the target cell based on the first information, and determining, based on the first information, whether to change the serving cell. In cross-cell beam switching scenarios, handover of the serving cell needs to be performed in some scenarios, while handover of the serving cell does not need to be performed in some other scenarios. When receiving a beam switching indication, the terminal device cannot determine whether cell handover needs to be performed. The terminal device can perform beam switching based on an indication of the network device and determine, based on the indication of the network device, whether to change the serving cell, to improve cross-cell beam indication performance.

According to the first aspect, in a possible design, before the first information is received, second information is also received. The second information includes configuration information of one or more candidate target cells, and the configuration information includes one or more of the following information: a cell radio network temporary identifier C-RNTI, a TCI state configuration, a synchronization broadcast signal block SSB receiving configuration, a random access channel RACH configuration, or serving cell configuration information. The candidate target cell is a non-serving cell. A configuration of the one or more candidate target cells is preconfigured. In a case in which the terminal device receives the second information, when receiving the first information, the terminal device may determine, based on the first information, whether to change the serving cell. In a case in which the terminal device does not receive the second information, when receiving the first information, the terminal device may interpret the first information in an existing format, and does not need to determine whether to change the serving cell. In this way, functions of the first information can be distinguished depending on whether the terminal device receives the configuration information of the non-serving cell in advance, so that the terminal device can perform beam switching or the cell handover more quickly and accurately. The non-serving cell is configured, so that when the terminal device changes the serving cell, the terminal device can perform subsequent communication based on the configuration of the non-serving cell.

According to a second aspect, a communication method is provided. The method may be performed by a network device, or may be performed by a component of the network device. The method may be implemented in the following steps. First information is generated, and the first information is sent to a terminal device. The first information indicates to activate a first transmission configuration indicator TCI state of a target cell and indicates whether to change a serving cell. In cross-cell beam switching scenarios, handover of the serving cell needs to be performed in some scenarios, while handover of the serving cell does not need to be performed in some other scenarios. When receiving a beam switching indication, the terminal device cannot determine whether cell handover needs to be performed. The terminal device can perform beam switching based on an indication of the network device and determine, based on the indication of the network device, whether to change the serving cell, to improve cross-cell beam indication performance.

According to the second aspect, in a possible design, before the first information is sent, second information is also sent. The second information includes configuration information of one or more candidate target cells, and the configuration information includes one or more of the following information: a cell radio network temporary identifier C-RNTI, a TCI state configuration, a synchronization broadcast signal block SSB receiving configuration, a random access channel RACH configuration, or serving cell configuration information. The candidate target cell is a non-serving cell. A configuration of the one or more candidate target cells is preconfigured for the terminal device. In a case in which the terminal device receives the second information, when receiving the first information, the terminal device may determine, based on the first information, whether to change the serving cell. In a case in which the terminal device does not receive the second information, when receiving the first information, the terminal device may interpret the first information in an existing format, and does not need to determine whether to change the serving cell. In this way, functions of the first information can be distinguished depending on whether the terminal device receives the configuration information of the non-serving cell in advance, so that the terminal device can perform beam switching or the cell handover more quickly and accurately. The non-serving cell is configured, so that when the terminal device changes the serving cell, the terminal device can perform subsequent communication based on the configuration of the non-serving cell.

According to the first aspect or the second aspect, this application further provides the following possible designs.

In a possible design, the first information is MAC CE signaling, the MAC CE signaling includes a first field, and the first field indicates whether to change the serving cell.

When the first information is the MAC CE signaling, optionally, the MAC CE signaling further includes a first serving cell identifier field, and the first serving cell identifier field indicates the target cell. A size of a serving cell identifier field is less than a size of an identifier field of the target cell. The target cell is indicated by the serving cell identifier field, so that overheads for indicating the target cell can be reduced.

When the first information is the MAC CE signaling, optionally, the MAC CE signaling further includes a second serving cell identifier field, and the second serving cell identifier field corresponds to the serving cell. The MAC CE signaling further includes a second field, and the second field indicates the target cell.

In a possible design, the first information is DCI signaling, and indicates to change the serving cell when a third field in the DCI signaling is a predetermined value.

The DCI signaling may include one or more fields, and one or more fields may be predefined as a specific value. For example, it is predefined that values of the one or more fields are all 0, or all 1, or some are 0 and some are 1. In this way, whether to change the serving cell can be indicated when additional overheads are not increased.

A predefined field may be one or more of the following fields: virtual resource block to physical resource block mapping (VRB-to-PRB mapping), a physical resource block bundling size indicator (PRB bundling size indicator), a rate matching indicator (Rate matching indicator), a zero power CSI-RS trigger (ZP CSI-RS trigger), a PDSCH group index (PDSCH group index), a downlink assignment index (Downlink assignment index), an antenna port (Antenna port(s)), an uplink sounding reference signal request (SRS request), code block group transmission information (CBG transmission information, CBGTI), code block group flushing out information (CBG flushing out information, CBGFI), a CP extension indicator (ChannelAccess-CPext), and a minimum applicable scheduling offset indicator (Minimum applicable scheduling offset indicator). The predefined field may alternatively be another field.

In a possible design, the first information is DCI, and scrambling information of the DCI indicates whether to perform handover to the target cell. When there is an association relationship between the scrambling information of the DCI and an identifier of the target cell, the scrambling information of the DCI indicates to perform handover to the target cell.

In a possible design, the first information is a first TCI state identifier; and when the first TCI state identifier is of a first value, the first information indicates to change the serving cell; or when the first TCI state identifier is of a second value, the first information indicates not to change the serving cell. The first TCI state identifier of the first value is an identifier in a preset set of TCI state identifiers, and the first TCI state identifier of the second value is not an identifier in the preset set of TCI state identifiers.

In a possible design, the first information may alternatively be a first codepoint. When the first codepoint is of a preset value, the first information indicates to change the serving cell; or when the first codepoint is not of a preset value or the first codepoint is of a value other than the preset value, the first information indicates not to change the serving cell.

In a possible design, the first information is a fourth field, and the fourth field is a field in MAC CE signaling or a field in downlink control information DCI. For example, the fourth field is a BWP-ID field. The determining, based on the first information, whether to change the serving cell includes: when a value of the fourth field is a third value, determining to change the serving cell; or when a value of the fourth field is a fourth value, determining not to change the serving cell. When the value of the fourth field in the MAC CE signaling/DCI is a value in a predefined set, it is determined to change the serving cell. The predefined set may be defined according to a protocol, or may be indicated to the terminal device by the network device.

According to a third aspect, a communication apparatus is provided. The apparatus may be a terminal device, or may be a component (for example, a chip, a chip system, or a circuit) located in the terminal device. The apparatus has a function of implementing the method in any one of the first aspect or the possible designs of the first aspect. The function may be implemented by hardware, or may be implemented by executing corresponding software by hardware. The hardware or software includes one or more modules that correspond to the foregoing functions. In a design, the apparatus may include a processing unit and a transceiver unit. For example, the transceiver unit is configured to receive first information. The processing unit is configured to: activate a first TCI state of a target cell based on the first information, and determine, based on the first information, whether to change a serving cell. For more detailed descriptions of the processing unit and the transceiver unit, directly refer to related descriptions in the first aspect. For beneficial effects of the third aspect and the possible designs, refer to descriptions of corresponding parts in the first aspect.

According to a fourth aspect, a communication apparatus is provided. The apparatus may be a network device, or may be a component (for example, a chip, a chip system, or a circuit) located in the network device. The apparatus has a function of implementing the method in any one of the second aspect or the possible designs of the second aspect. The function may be implemented by hardware, or may be implemented by executing corresponding software by hardware. The hardware or software includes one or more modules that correspond to the foregoing functions. In a design, the apparatus may include a processing unit and a transceiver unit. For example, the processing unit is configured to generate first information, and the transceiver unit is configured to send the first information to a terminal device. For more detailed descriptions of the processing unit and the transceiver unit, directly refer to related descriptions in the second aspect. For beneficial effects of the fourth aspect and the possible designs, refer to descriptions of corresponding parts in the second aspect.

According to a fifth aspect, an embodiment of this application provides a communication apparatus. The communication apparatus includes an interface circuit and a processor, and the processor and the interface circuit are coupled to each other. The processor is configured to implement, via a logic circuit or by executing code instructions, the method described in the first aspect or the possible designs of the first aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver or an input/output interface.

Optionally, the communication apparatus may further include a memory, configured to: store instructions executed by the processor, or store input data required for running the instructions by the processor, or store data generated after the processor runs the instructions. The memory may be a physically independent unit, or may be coupled to the processor, or the processor includes the memory.

According to a sixth aspect, an embodiment of this application provides a communication apparatus. The communication apparatus includes an interface circuit and a processor, and the processor and the interface circuit are coupled to each other. The processor is configured to implement, via a logic circuit or by executing code instructions, the method described in the second aspect or the possible designs of the second aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver or an input/output interface.

Optionally, the communication apparatus may further include a memory, configured to: store instructions executed by the processor, store input data required for running the instructions by the processor, or store data generated after the processor runs the instructions. The memory may be a physically independent unit, or may be coupled to the processor, or the processor includes the memory.

According to a seventh aspect, this application provides a communication apparatus, including at least one processor. The at least one processor is configured to execute a computer program or instructions in a memory, so that the communication apparatus performs the method in the first aspect or embodiments of the first aspect.

According to an eighth aspect, this application provides a communication apparatus, including at least one processor. The at least one processor is configured to execute a computer program or instructions in a memory, so that the communication apparatus performs the method in the second aspect or embodiments of the second aspect.

According to a ninth aspect, this application provides a communication apparatus, including a processor, a transceiver, and a memory. The processor is configured to execute a computer program or instructions in the memory, so that the communication apparatus performs the method in the first aspect or embodiments of the first aspect.

According to a tenth aspect, this application provides a communication apparatus, including a processor, a transceiver, and a memory. The processor is configured to execute a computer program or instructions in the memory, so that the communication apparatus performs the method in the second aspect or embodiments of the second aspect.

According to an eleventh aspect, this application provides a communication apparatus, including a processor and a memory. The processor is configured to execute a computer program or instructions in the memory, so that the communication apparatus performs the method in the first aspect or embodiments of the first aspect.

According to a twelfth aspect, this application provides a communication apparatus, including a processor and a memory. The processor is configured to execute a computer program or instructions in the memory, so that the communication apparatus performs the method in the second aspect or embodiments of the second aspect.

According to a thirteenth aspect, this application provides another communication apparatus, including an interface circuit and a logic circuit. The interface circuit may be understood as an input/output interface, the logic circuit may be understood as a processor, and the logic circuit may be configured to run code instructions to perform the method in the first aspect or embodiments of the first aspect.

According to a fourteenth aspect, this application provides another communication apparatus, including an interface circuit and a logic circuit. The interface circuit may be understood as an input/output interface, the logic circuit may be understood as a processor, and the logic circuit may be configured to run code instructions to perform the method in the second aspect or embodiments of the second aspect.

According to a fifteenth aspect, this application provides a computer-readable storage medium. The computer-readable storage medium stores a computer program or readable instructions. When the computer program or the readable instructions are executed by a communication apparatus, the method according to the foregoing aspects or the possible designs of the aspects is performed.

According to a sixteenth aspect, this application provides a chip system. The chip system includes a processor, and may further include a memory. The memory is configured to store a program, instructions, or code. The processor is configured to execute the program, the instructions, or the code stored in the memory, to implement the method in the foregoing aspects or the possible designs of the foregoing aspects. The chip system may include a chip, or may include a chip and another discrete component.

According to a seventeenth aspect, a computer program product that includes instructions is provided. When the computer program product is executed by a communication apparatus, the method in the aspects or the possible designs of the aspects is performed.

### BRIEF DESCRIPTION OF DRAWINGS

FIG. 1 is a schematic diagram of an architecture of a communication system according to an embodiment of this application;
FIG. 2 is a schematic diagram of beam switching from a source cell to a target cell according to an embodiment of this application;
FIG. 3 is a schematic flowchart of a communication method according to an embodiment of this application;
FIG. 4 is a schematic diagram of a structure of MAC CE signaling according to an embodiment of this application;
FIG. 5 is a first schematic diagram of a structure of a communication apparatus according to an embodiment of this application; and
FIG. 6 is a second schematic diagram of a structure of a communication apparatus according to an embodiment of this application.

### DESCRIPTION OF EMBODIMENTS

Embodiments of this application provide a communication method and apparatus, to implement cross-cell beam indication and improve cross-cell beam indication performance. The method and the apparatus are based on a same or similar technical concept. Because a problem-resolving principle of the method is similar to that of the apparatus, mutual reference may be made to implementations of the apparatus and the method. Repeated parts are not described in detail again.

The communication method provided in embodiments of this application may be applied to a 4th generation (4th generation, 4G) communication system, for example, long term evolution (long term evolution, LTE), may be applied to a 5th generation (5th generation, 5G) communication system, for example, 5G new radio (new radio, NR), or may be applied to various future communication systems, for example, a 6th generation (6th generation, 6G) communication system.

The following describes in detail embodiments of this application with reference to accompanying drawings.

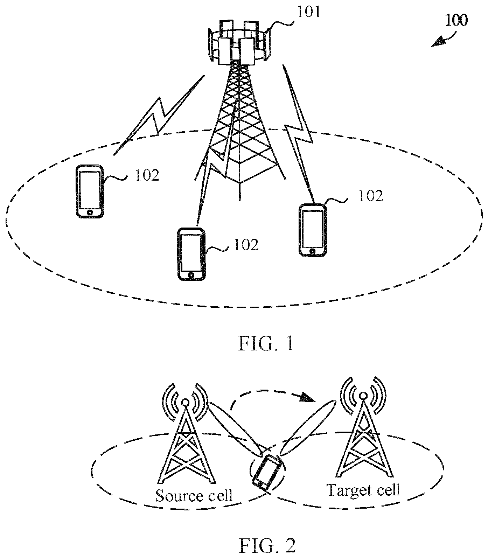

FIG. 1 shows a possible architecture of a communication system to which a cell handover method according to an embodiment of this application is applicable. Refer to FIG. 1. A communication system 100 includes a network device 101 and a terminal device 102. The network device 101 provides a service for the terminal device 102 within a coverage range.

The network device 101 is a node in a radio access network (radio access network, RAN), and may also be referred to as a base station or a RAN node (or device). Some examples of the network device 101 are: a next-generation NodeB (next generation NodeB, gNB), a next-generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The network device 101 may alternatively be a satellite, and the satellite may also be referred to as a high-altitude platform, a high-altitude aircraft, or a satellite base station. The network device 101 may alternatively be another device that has a network device function. For example, the network device 101 may be a device that functions as a network device in device to device (device to device, D2D) communication. The network device 101 may alternatively be a network device in a possible future communication system.

In some deployments, the network device may include a central unit (central unit, CU) and (distributed unit, DU). The network device may further include an active antenna unit (active antenna unit, AAU). The CU implements some functions of the network device, and the DU implements some functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling, for example, RRC layer signaling, may also be considered as being sent by the DU or sent by the DU and the AAU. It may be understood that the network device may be a device including one or more of a CU node, a DU node, and an AAU node. In addition, the CU may be classified as a network device in the RAN, or a network device in a core network (core network, CN). This is not limited in this application.

The terminal device 102 is also be referred to as user equipment (user equipment, UE), a mobile station (mobile station, MS), a mobile terminal (mobile terminal, MT), or the like, and is a device that provides a user with voice and/or data connectivity. For example, the terminal device 102 is a handheld device, a vehicle-mounted device, or the like that has a wireless connection function. Currently, the terminal device 102 may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an unmanned aerial vehicle, or an aircraft), or the like. The terminal device 102 may alternatively be another device that has a terminal device function. For example, the terminal device 102 may be a device that functions as a terminal device in the D2D communication.

First, a concept of a beam in this application is described.

In an NR protocol, the beam may be represented by a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a transmission configuration indicator (transmission configuration indicator, TCI) state (state). The beam may alternatively be indicated by a parameter of a spatial relationship (spatial relationship). Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI state (including a DL TCI state and/or an UL TCI state), the spatial relationship (spatial relationship), or the like. The terms described above are also equivalent to each other. Alternatively, the beam may be replaced with another term representing the beam. This is not limited in this application.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like. Optionally, a plurality of beams that have a same communication feature or similar communication features are considered as one beam. One beam may correspond to one or more antenna ports, and is used to transmit a data channel, a control channel, a sounding signal, and the like. One or more antenna ports that form (correspond to) one beam may also be considered as one antenna port set or one antenna port group.

The terminal device performs beam communication with the network device in a serving cell. As the terminal device moves or for another reason, the terminal device may perform handover of the serving cell. Cell handover may be implemented by switching a serving beam. The terminal device may perform layer 1 (layer 1, L1) measurement and reporting on a non-serving cell. To be specific, the terminal device performs, based on a physical layer measurement mechanism, physical layer measurement on a downlink signal sent from the non-serving cell, and reports a measurement result to the serving cell. A beam indication is sent from the serving cell to the terminal device, and the terminal device performs beam switching based on the beam indication, and also performs the handover of the serving cell, to implement the cell handover based on the beam switching. The cell handover based on the beam switching may be further implemented by using a signaling indication of a layer 2 (layer 2, L2), namely, the MAC layer. An implementation is similar to that of using a signaling indication of an L1, and details are not described again. A scenario in which the cell handover is performed based on the beam switching is shown in FIG. 2. A terminal device is handed over from one cell to another cell. The cell before the handover may be referred to as a source serving cell or a source cell, and the cell to which the handover is to be performed or is performed may be referred to as a target serving cell or a target cell. A physical cell identifier (physical cell identifier, PCI) of the target cell may be the same as or different from that of the source cell. The terminal device performs beam communication in the source cell. Because of mobility of the terminal device or for another reason, the terminal device may be handed over to the target cell. After the handover, the terminal device performs beam communication with the target cell. In embodiments of this application, the source cell and the target cell may be served by a same network device, or may be served by different network devices. That the terminal device performs beam communication with the source cell may be understood as follows: The terminal device performs, through a beam, wireless communication with a network device that is in the source cell. Similarly, that the terminal device performs beam communication with the target cell may be understood as follows: The terminal device performs, through a beam, wireless communication with a network device that is in the target cell.

In a scenario, the network device indicates the terminal device to receive a downlink signal in a non-serving cell, but the terminal device does not move and the cell handover does not need to be performed. In this scenario, the terminal device only needs to perform the beam switching, and does not need to perform the cell handover. For example, the terminal device receives a signal through a beam of only the non-serving cell (for example, a cell whose PCI is different from a cell of a current serving cell). The signal includes a physical downlink control channel (physical downlink control channel, PDCCH) or a physical downlink shared channel (physical downlink shared channel, PDSCH). In addition, the terminal device still camps on the source cell, in other words, configuration information of each physical channel of the terminal device is still configured for the source cell. For another example, in a multi-TRP transmission scenario, when the serving cell remains unchanged, the terminal device receives the downlink signal from a TRP that is in the non-serving cell. The downlink signal is, for example, a PDCCH and/or a PDSCH. In other words, the terminal device receives the signal through an antenna of the non-serving cell, but the serving cell of the terminal device remains unchanged.

It can be seen that in cross-cell beam switching scenarios, handover of the serving cell needs to be performed in some scenarios, while handover of the serving cell does not need to be performed in some other scenarios. When receiving a beam switching indication, the terminal device cannot determine whether the cell handover needs to be performed.

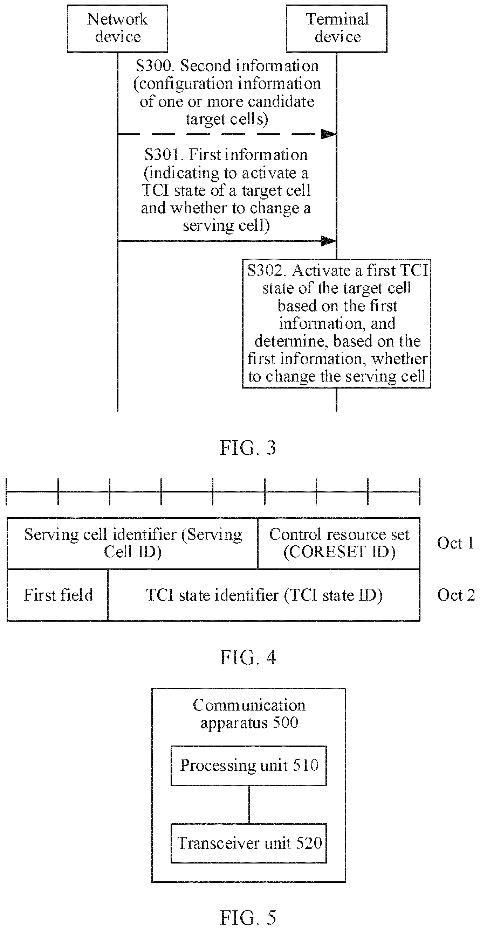

According to a communication method provided in embodiments of this application, performance of a cross-cell beam indication solution can be improved. As shown in FIG. 3, a specific procedure of the communication method provided in this embodiment of this application is described as follows.

S301. A network device generates first information and sends the first information to a terminal device, and the terminal device receives the first information from the network device.

The first information has the following indication functions, or the first information includes indication information that has the following indication functions:
(1) indicating to activate a TCI state of a target cell, where the TCI state herein is denoted as a first TCI state, and the first information may include a first TCI state identifier (TCI state ID); indicating to perform beam switching; or indicating any one of a spatial relationship, a beam ID, a unified TCI, an UL-TCI, a common beam, QCL information, a QCL assumption, or a spatial filter; and
(2) indicating whether to change a serving cell; indicating whether to perform handover to the target cell; or indicating whether to perform handover of the serving cell. In the following embodiments, "indicating whether to change a serving cell" is used as an example for description. It may be understood that the solution is still applicable when an indication meaning is another similar meaning. When the first information indicates "not to change the serving cell", the terminal determines a new beam based on the TCI state ID. The new beam may be a beam whose physical cell identifier is different from that of the current serving cell, or may be a beam of another non-serving cell. In this case, the terminal does not change the serving cell. When the first information indicates "to change the serving cell", the terminal determines a new beam based on the TCI state ID. The new beam may be a beam whose physical cell identifier is different from that of the current serving cell, or may be a beam of another non-serving cell. In this case, the terminal device changes a serving cell on which the terminal device is to camp to a serving cell indicated by the first information.

S302. The terminal device activates the first TCI state of the target cell based on the first information, and determines, based on the first information, whether to change the serving cell.

The terminal device performs a corresponding operation based on an indication meaning of the first information.

According to the embodiment in FIG. 3, the terminal device can perform the beam switching based on an indication of the network device, and determine, based on the indication of the network device, whether to change the serving cell, to improve cross-cell beam indication performance.

The following describes an optional implementation of the embodiment in FIG. 3 by using an example.

### Implementation 1

The first information is MAC control element (MAC control element, MAC CE) signaling. Correspondingly, the network device sends the MAC CE signaling to the terminal device. The terminal device receives the MAC CE signaling, of the network device, that indicates to activate the first TCI state of the target cell and indicates whether to change the serving cell. The terminal device activates the first TCI state of the target cell based on the MAC CE signaling, and determines, based on the MAC CE signaling, whether to change the serving cell.

The MAC CE signaling may include a first field, and the first field indicates whether to change the serving cell. For example, the first field occupies one bit. When a value of the bit is 1, the first field indicates to change the serving cell; or when a value of the bit is 0, the first field indicates not to change the serving cell. The first field may indicate a plurality of beams. When the plurality of beams are indicated, a plurality of bits may indicate whether to change the serving cell during the beam switching.

The MAC CE signaling may further include a field that indicates to activate the first TCI state of the target cell. For example, the field may be a TCI state identifier (TCI state ID) field. The TCI state ID field indicates the first TCI state of the target cell. The terminal device may determine, based on the TCI state ID field, to perform switching to a beam of the target cell. A TCI state configured by the network device for the terminal device in the serving cell may include a TCI state of a non-serving cell. When the serving cell of the network device determines that the terminal device needs to perform the switching to the beam of the target cell, indication information for activating the first TCI state is sent from the serving cell to the terminal device.

The MAC CE signaling may further include a serving cell identifier (Serving Cell ID) field. In a scenario, the serving cell ID field may indicate a target carrier or a target serving cell indicated by the MAC CE signaling. Optionally, the serving cell ID may be logical IDs of all serving cells of the terminal device.

The following provides a possible diagram of a structure of the MAC CE signaling. As shown in FIG. 4, the MAC CE signaling includes a serving cell identifier field, a first field, and a TCI state identifier field. The serving cell identifier field is an optional field, and the MAC CE signaling may further include more other fields. For example, the MAC CE signaling may indicate a receive beam of a downlink signal, and the downlink signal is, for example, a PDCCH. A format of the MAC CE signaling may further include an identifier (ID) of a control resource set (control resource set, CORESET), and the CORESET is a resource used by a terminal device to receive the PDCCH.

Indication meanings of the fields in the MAC CE signaling are separately described in cases in which the first field indicates not to or indicates to change the serving cell.
(1) The first field indicates not to change the serving cell. The serving cell identifier field included in the MAC CE signaling is denoted as a first serving cell identifier field. The first serving cell identifier field has an association relationship with an identifier of a target cell, or the first serving cell identifier field indicates the target cell. In a carrier aggregation scenario, generally, the serving cell identifier field in the MAC CE signaling indicates a target carrier, and the serving cell identifier may be logical IDs of all serving cells of the terminal device. For example, the serving cell identifier field has five bits in total, and may indicate 32 carriers. However, in actual application, a quantity of carriers configured by a network side for the terminal device may be less than 32. An unused bit combination may indicate a candidate target cell, or the serving cell identifier field may be associated with an identifier of the candidate target cell. The candidate target cell is a cell to which cell handover is performed based on beam switching, or the candidate target cell is a cell to which cell handover is performed based on an L1 layer or an L2 layer. The candidate target cell may also be referred to as a non-serving cell. It is assumed that the identifier of the candidate target cell is represented by a PCI. For example, a serving cell identifier field A is associated with a PCI a, a serving cell identifier field B is associated with a PCI b, and a serving cell identifier field C is associated with a PCI c. When the serving cell is not changed, the terminal device determines, based on the first serving cell identifier field, to perform handover of a target cell that corresponds to the beam. To be specific, when the first field indicates not to change the serving cell, the terminal device determines, based on the first serving cell identifier field, that a cell of a reference signal included in a TCI state indicated by the MAC CE signaling is the target cell. When the MAC CE signaling further includes another field, a cell that corresponds to an indication meaning of the another field is also the target cell indicated by the first serving cell identifier field. For example, the MAC CE signaling further includes a control resource set identifier field. The control resource set identifier field indicates a control resource set that corresponds to the target cell. In this case, an indicated beam is used to receive a signal of the target control resource set. For another example, the MAC CE signaling includes the TCI state identifier field, and the TCI state identifier field indicates a first TCI state that corresponds to the target cell.

An association relationship between the serving cell identifier field and the identifier of the candidate target cell may be carried in preconfigured information, and the preconfigured information may be carried by RRC signaling. A network device sends the preconfigured information to the terminal device in advance. The terminal device receives the preconfigured information of the network device, and obtains the association relationship between the serving cell identifier field and the identifier of the candidate target cell from the preconfigured information. When the terminal device subsequently receives the MAC CE signaling, the terminal device determines, based on the association relationship between the serving cell identifier field and the identifier of the candidate target cell in the preconfigured information, the target cell indicated by the serving cell identifier field that is in the MAC CE signaling. The identifier of the candidate target cell may be, for example, a PCI of the candidate target cell. The serving cell identifier field is associated with the PCI of the candidate target cell, so that the serving cell identifier field can indicate the candidate target cell. For example, the first serving cell identifier field indicates the target cell. A PCI field needs to occupy 10 bits, and the serving cell identifier field occupies five bits. In this way, overheads for indicating the target cell can be reduced.
(2) The first field indicates not to change the serving cell. The MAC CE signaling may include a second field. The second field indicates an identifier of the target cell. The second field may be a PCI of the target cell, or may be a serving cell identifier associated with the PCI of the target cell. For the association herein, refer to the method for associating the serving cell identifier field with the identifier of the target cell described in the foregoing paragraph. When the serving cell identifier field is associated with the identifier of the target cell, the second field may be added to the MAC CE signaling, and the second field indicates the serving cell identifier field associated with the identifier of the target cell. An original serving cell identifier field may be reserved in the MAC CE signaling, and is denoted as a second serving cell identifier field. The reserved second serving cell identifier field may indicate the serving cell of the terminal device. For example, the reserved serving cell identifier may be logical IDs of all serving cells of the terminal device, and the logical IDs represent the serving cells of the terminal device.
(3) The first field indicates to change the serving cell, and the TCI state identifier field indicates a first TCI state of the target cell. The terminal device determines a target beam of the target cell based on the TCI state identifier field, and performs switching to a beam of the target cell. The terminal device determines, based on the first field, that the serving cell needs to be changed, and perform cell handover to the target cell. The MAC CE signaling may include a first serving cell identifier field. The first serving cell identifier field has an association relationship with an identifier of the target cell, or the first serving cell identifier field indicates the target cell. For a solution in which the first serving cell identifier field indicates the target cell, refer to related descriptions of (1). Details are not described herein again. The terminal device determines, based on the first serving cell identifier field, the target cell to which the terminal device is to be handed over, or the terminal device determines, based on the first serving cell identifier field, the target cell indicated by the MAC CE signaling. When the MAC CE signaling further includes another field, a cell that corresponds to an indication meaning of the another field is also the target cell indicated by the first serving cell identifier field. For example, the MAC CE signaling further includes a control resource set identifier field. After the terminal device is handed over to the target cell, the terminal device needs to receive, through the beam indicated by the first TCI state, a control resource set indicated by the control resource set identifier field.

Alternatively, the MAC CE signaling may include a second field, and the second field indicates the target cell. For a solution in which the second field indicates the target cell, refer to descriptions of (2). Details are not described herein again.

In embodiments of this application, the association relationship between the serving cell identifier field and the identifier of the target cell may be configured for the terminal device in a preconfiguration manner, or in a protocol-predefining manner. In the preconfiguration manner, the RRC signaling may be used for the configuration.

Optionally, before the first information is received, the method may further include S300.

S300. The network device sends second information to the terminal device, and the terminal device receives the second information of the network device.

The second information includes configuration information of one or more candidate target cells, and configuration information for each candidate target cell includes one or more of the following information: a cell radio network temporary identifier (cell radio network temporary identifier, C-RNTI), a TCI state configuration, a downlink reference signal receiving configuration, a random access channel (random access channel, RACH) configuration, or serving cell configuration information. A downlink reference signal may be a synchronization signal/physical broadcast channel block (synchronization system/physical broadcast channel block, SS/PBCH block), and the SS/PBCH block may be referred to as a synchronization signal block (synchronization signal block, SSB) for short. The serving cell configuration information may include a combination of any one or more of the following information: a control resource set (CORESET), a bandwidth part (bandwidth part, BWP) configuration, an uplink physical channel configuration, or a downlink physical channel configuration. The candidate target cell is a non-serving cell for the serving cell, and is the cell to which the cell handover may be performed based on the beam switching. The second information may also be referred to as the preconfigured information, and may be carried in the RRC signaling.

The network device may send the MAC CE signaling with different functions to the terminal device. In one case, the MAC CE signaling may have a function of indicating whether to change the serving cell. In another case, the MAC CE signaling may alternatively be in a conventional format. In the conventional format, the MAC CE signaling does not have a function of indicating whether to change the serving cell or does not include a field that indicates whether to change the serving cell. A format used by the terminal device for interpreting the received MAC CE signaling may be determined depending on whether the second information is received. Optionally, when receiving the second information, the terminal device may determine that the MAC CE signaling carries the field that indicates whether to change the serving cell, or determine that the MAC CE signaling has the function of indicating whether to change the serving cell. If the terminal device does not receive the second information, when the terminal device receives the MAC CE signaling, the terminal device may parse the MAC CE signaling in a conventional MAC CE signaling format, for example, interpret the MAC CE signaling in a format of TCI activation signaling defined according to a protocol Rel-17.

Alternatively, the terminal device may not determine a format of the first information based on the second information. In another embodiment, the MAC CE signaling has only one format, in other words, the MAC CE signaling carries the field that indicates whether to change the serving cell, or the MAC CE signaling has the function of indicating whether to change the serving cell. In this case, different values of the first field in the MAC CE signaling may indicate the following different meanings: a TCI indication of a serving carrier (or the serving cell or a current cell), a cross-cell TCI indication and no serving cell handover, or a cross-cell TCI indication and serving cell handover. In this way, whether a TCI state activated based on the MAC CE signaling is of the current cell or the target cell may be indicated, and whether to perform handover of the serving cell may be indicated. After receiving the first information, the terminal device always parses the field that indicates whether to change the serving cell.

In still another embodiment, a new signaling format of the MAC CE signaling is defined. When the beam switching is performed in the current cell or cross-cell beam switching is performed but the serving cell is not changed, the network device uses an original MAC CE format for indication. When cross-cell beam switching is indicated or the serving cell of the terminal device is changed, the network device uses the new signaling format of the MAC CE. After receiving the MAC CE signaling, the terminal device determines, based on a signaling format of the MAC CE signaling, whether there is a cross-cell beam indication. When the format of the MAC CE signaling is the new MAC CE signaling format, the MAC CE signaling indicates whether to change the serving cell, and the terminal device parses the MAC CE signaling to determine whether to change the serving cell. When receiving the MAC signaling that is in the original MAC CE signaling format, the terminal device may parse the MAC CE signaling in the conventional MAC CE signaling format, for example, interpret the MAC CE signaling in a format of TCI activation signaling defined according to a protocol Rel-17.

In addition, the MAC CE signaling further includes a timing indication field; and the timing indication field indicates an identifier of a known timing advance group, and the timing advance group is used by the terminal device to determine uplink timing after the terminal device is handed over to the target cell; the timing indication field indicates a timing advance TA value, and the TA value is used by the terminal device to determine uplink timing after the terminal device is handed over to the target cell; or the timing indication field indicates an offset of a timing advance TA, and the offset of the TA is used by the terminal device to determine uplink timing based on a timing advance of a current cell or a TA of the target cell after the terminal device is handed over to the target cell.

### Implementation 2

The first information is a first TCI state identifier. When the first TCI state identifier is of a first value, the first information indicates to change the serving cell; or when the first TCI state identifier is of a second value, the first information indicates not to change the serving cell.

A TCI is a field that is in downlink control information (downlink control information, DCI) and that indicates quasi colocation of a PDSCH antenna port. An upper layer in a protocol configures a QCL based on a TCI state. The network device configures the TCI state for the terminal device based on RRC signaling, and the network device activates one TCI state based on MAC CE signaling or DCI signaling. In an optional implementation, the network device activates a plurality of TCI states based on the MAC CE signaling, and then uses the DCI to indicate one of the plurality of activated TCI states.

Assuming that the network device uses the MAC CE signaling to indicate the activated TCI state, the TCI state may be indicated by a TCI state identifier in the signaling. A set of TCI state identifiers may be preset. When a TCI state identifier in the set is used in the MAC CE signaling to indicate to activate a TCI state, it means that the serving cell needs to be changed. The preset set of TCI state identifiers may also be referred to as: a combination of the TCI state identifiers, one or more TCI state identifiers, or another name. The preset set of TCI state identifiers may be defined according to a protocol, or may be indicated to the terminal device by the network device.

Assuming that the preset set of TCI state identifiers is indicated to the terminal device by the network device, the network device may send preconfigured information to the terminal device, and the terminal device receives the preconfigured information. The preconfigured information includes the one or more TCI state identifiers. The preconfigured information may further include one piece of indication information. The indication information indicates that the one or more TCI state identifiers are associated with changing the serving cell. Specifically, TCI state identifiers that are associated with changing the serving cell may be configured. For example, the set of TCI state identifiers may include TCI state IDs {32 to 63}. When a TCI state identifier in the MAC CE is any one of the TCI state IDs {32 to 63}, handover of the serving cell is performed during beam switching. Another TCI state identifier that is not in the set of TCI state identifiers is associated with not changing the serving cell. When a TCI state identifier in the MAC CE is not a TCI state identifier in the set of TCI state identifiers, handover of the serving cell is not performed during beam switching. For example, when the TCI state identifier in the MAC CE is any one of TCI state IDs {0 to 31}, handover of the serving cell is not performed.

For example, the network device sends the first TCI state identifier to the terminal device, and the terminal device receives the first TCI state identifier. The first TCI state identifier indicates to activate the first TCI state of the target cell. If the first TCI state identifier is included in the preset set of TCI state identifiers, the first TCI state identifier is of the first value, and on this basis, the terminal device determines that the serving cell needs to be changed. In this case, the terminal device activates the first TCI state of the target cell and is handed over to the target cell. If the first TCI state identifier is not included in the preset set of TCI state identifiers, the first TCI state identifier is of the second value, and on this basis, the terminal device determines that the serving cell does not need to be changed. In this case, the terminal device activates the first TCI state of the target cell, remains in the serving cell, and is not handed over to the target cell. Both the first TCI state identifier of the first value and the first TCI state identifier of the second value are used to activate the first TCI state of the target cell. When the first TCI state identifier is of the first value, the first information indicates to change the serving cell; or when the first TCI state identifier is of the second value, the first information indicates not to change the serving cell.

The first information may alternatively be a first codepoint. When the first codepoint is of a preset value, the first information indicates to change the serving cell; or when the first codepoint is not of a preset value or the first codepoint is of a value other than the preset value, the first information indicates not to change the serving cell. When the DCI indicates the activated TCI state, the network device activates a plurality of TCI states based on the MAC CE signaling, and then uses the DCI to indicate one of the plurality of activated TCI states. In the DCI, a codepoint of a TCI indication field indicates the activated TCI state. Similar to a solution in which the MAC CE indicates the activated TCI state, a set of codepoints may also be preset, and the set of codepoints is associated with changing the serving cell. When a codepoint in the set of codepoints is used in the DCI signaling to indicate to activate a TCI state, it means that the serving cell needs to be changed. When a codepoint not in the set of codepoints is used in the DCI signaling to indicate to activate a TCI state, it means that the serving cell does not need to be changed. The set of codepoints may also be referred to as a codepoint combination, one or more codepoints, or another name.

The set of codepoints may be defined according to a protocol, or may be indicated to the terminal device by the network device. When the network device indicates the set of codepoints to the terminal device, the network device may send preconfigured information to the terminal device, and the terminal device receives the preconfigured information. The preconfigured information includes one or more codepoints, and the preconfigured information may further include one piece of indication information, to indicate that the one or more codepoints are associated with changing the serving cell. For example, the association between the set of codepoints and changing the serving cell may be represented in a table form. As shown in Table 1, the set of codepoints includes a value 010 and a value 011. When the codepoint of the TCI indication field in the DCI is 010 or 011, handover of the serving cell is performed during the beam switching. Other codepoints that are not in the set of codepoints are associated with not changing the serving cell. When the codepoint of the TCI indication field in the DCI is not a codepoint in the set of codepoints, handover of the serving cell is not performed during the beam switching.

**Table 1**

| DCI codepoint value | Whether to change the serving cell |
|---|---|
| 010 | Yes |
| 011 | Yes |

For example, the network device sends the MAC CE signaling to the terminal device, to indicate to activate a plurality of TCI states, and then uses the DCI signaling to indicate one of the plurality of activated TCI states. Specifically, a first codepoint of the TCI indication field in the DCI signaling indicates to activate the first TCI state. The terminal device receives the MAC CE signaling and the DCI signaling, and determines, based on the first codepoint of the TCI indication field in the DCI signaling, to activate the first TCI state. If the first codepoint is included in the preset set of codepoints, the terminal device determines, based on a value of the first codepoint, that the serving cell needs to be changed. In this case, the terminal device activates the first TCI state of the target cell and is handed over to the target cell. If the first codepoint is not included in the preset set of codepoints, the terminal device determines, based on a value of the first codepoint, that the serving cell does not need to be changed. In this case, the terminal device activates a value of the first TCI state of the target cell, and remains in the serving cell, that is, the serving cell is not changed.

When the preconfigured information is used to configure a set of TCI state identifiers or a set of TCI states, the preconfigured information may further include configuration information of one or more candidate target cells. For the configuration information of the one or more candidate target cells, refer to related descriptions in the second information above. Details are not described herein again.

It may be understood that when the DCI signaling indicates an activated TCI, the set of TCI state identifiers may also be preconfigured. The terminal device determines, by determining whether the TCI state identifier activated based on the DCI is in the preset set, whether to change the serving cell.

In addition, the first information may alternatively be information about another field in signaling. The another field is denoted as a fourth field, and the information about the fourth field is associated with whether to change the serving cell. When the information about the fourth field is a value in the preset set, the first information indicates to change the serving cell. When the information about the fourth field is not a value in the preset set, the first information indicates not to change the serving cell. The information about the fourth field may be, for example, a BWP field, and the preset set includes one or more BWP IDs. For example, the set includes a BWP ID field 11 that corresponds to a BWP ID 3. In this case, the information about the fourth field is associated with changing the serving cell.

### Implementation 3

The first information may be DCI signaling, and indicates to change the serving cell when a third field in the DCI signaling is a predetermined value.

In an embodiment of Implementation 3, the DCI signaling may include one or more fields, and one or more fields may be predefined as a specific value. For example, it is predefined that values of the one or more fields are all 0, or all 1, or some are 0 and some are 1. The predefined field and the specific value may be specified according to a protocol, or may be indicated to the terminal device by the network device. If the network device indicates the predefined field and the specific value to the terminal device, the network device may send preconfigured information to the terminal device. The preconfigured information carries the predefined field in the DCI and the corresponding specific value. Similarly, the preconfigured information may further carry configuration information of one or more candidate target cells. For the configuration information of the one or more candidate target cells, refer to related descriptions in the second information above. Details are not described herein again.

The predefined field may be one or more of the following fields: virtual resource block to physical resource block mapping (VRB-to-PRB mapping), a physical resource block bundling size indicator (PRB bundling size indicator), a rate matching indicator (Rate matching indicator), a zero power CSI-RS trigger (ZP CSI-RS trigger), a PDSCH group index (PDSCH group index), a downlink assignment index (Downlink assignment index), an antenna port (Antenna port(s)), an uplink sounding reference signal request (SRS request), CBGTI, CBGFI, a CP extension indicator (ChannelAccess-CPext), and a minimum applicable scheduling offset indicator (Minimum applicable scheduling offset indicator).

In another embodiment of Implementation 3, scrambling information of the DCI indicates whether to change the serving cell. When there is an association relationship between the scrambling information of the DCI and an identifier of the target cell, the scrambling information of the DCI indicates to perform handover to the target cell. An association relationship between the scrambling information and the candidate target cell may be predefined. When the DCI indicates to activate the target cell, and the scrambling information of the DCI is associated with the target cell, the terminal device activates a TCI state of the target cell and determines to change the serving cell. For example, when a base station sends the preconfigured information to the terminal, to indicate to scramble the DCI by using scrambling information A, the DCI indicates the beam switching and not to change the serving cell of the terminal; or when a base station sends the preconfigured information to the terminal, to indicate to scramble the DCI by using scrambling information B, the DCI indicates the beam switching and to change the serving cell of the terminal.

The scrambling information of the DCI may be a cell radio network temporary identifier (cell radio network temporary identifier, C-RNTI) or a configured scheduling RNTI (configured scheduling RNTI, CS-RNTI). The association relationship between the scrambling information of the DCI and the candidate target cell may be specified according to a protocol, or may be indicated to the terminal device by the network device, for example, indicated to the terminal device based on the preconfigured information.

In this application, the first information indicates to activate the first TCI state of the target cell, in other words, the first information indicates a first beam of the target cell. The first beam may be a beam used by the terminal device to receive a PDCCH or a PDSCH, or may be a beam used by the terminal device to send a physical uplink shared channel (Physical uplink shared channel, PUSCH), a physical uplink control channel (Physical uplink control channel, PUCCH), or an uplink sounding reference signal (Sounding reference signal, SRS).

In addition, the DCI further includes a timing indication field; and the timing indication field indicates an identifier of a known timing advance group, and the timing advance group is used by the terminal device to determine uplink timing after the terminal device is handed over to the target cell; the timing indication field indicates a timing advance TA value, and the TA value is used by the terminal device to determine uplink timing after the terminal device is handed over to the target cell; or the timing indication field indicates an offset of a timing advance TA, and the offset of the TA is used by the terminal device to determine uplink timing based on a timing advance of a current cell or a TA of the target cell after the terminal device is handed over to the target cell.

It may be understood that, to implement functions in the foregoing embodiments, the network device and the terminal device include corresponding hardware structures and/or software modules for performing the functions. A person skilled in the art should be easily aware that, with reference to units and method steps in the examples described in embodiments disclosed in this application, this application can be implemented by hardware or a combination of hardware and computer software. Whether a function is performed by hardware or hardware driven by computer software depends on a particular application scenario and a design constraint condition of the technical solutions.

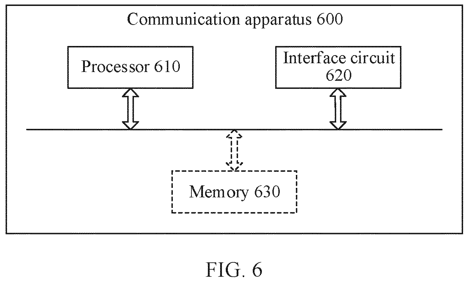

FIG. 5 and FIG. 6 are schematic diagrams of structures of possible communication apparatuses according to embodiments of this application. These communication apparatuses may be configured to implement a function of the terminal device or the network device in the foregoing method embodiments, and therefore, can also implement a beneficial effect of the method embodiments. In embodiments of this application, the communication apparatus may be one of the terminals 120a to 120j shown in FIG. 1, or may be the base station 110a or 110b shown in FIG. 1, or may be a module (such as a chip) used in the terminal or the base station.

As shown in FIG. 5, a communication apparatus 500 may include a processing unit 510 and a transceiver unit 520. The transceiver unit 520 may include a sending unit and a receiving unit. The sending unit is configured to perform a sending operation, and the receiving unit is configured to perform a receiving operation. The communication apparatus 500 is configured to implement functions of the terminal device or the network device in the method embodiment shown in FIG. 3.

When the communication apparatus 500 is configured to implement the functions of the terminal device in the method embodiment shown in FIG. 3, the transceiver unit 520 is configured to receive first information; and the processing unit 510 is configured to: activate a first TCI state of a target cell based on the first information, and determine, based on the first information, whether to change a serving cell.

When the communication apparatus 500 is configured to implement the functions of the network device in the method embodiment shown in FIG. 3, the processing unit 510 is configured to generate first information, and the transceiver unit 520 is configured to send the first information to the terminal device.

For more detailed descriptions of the processing unit 510 and the transceiver unit 520, directly refer to related descriptions in the method embodiment shown in FIG. 3. Details are not described herein again.

As shown in FIG. 6, a communication apparatus 600 includes a processor 610 and an interface circuit 620. The processor 610 and the interface circuit 620 are coupled to each other. It may be understood that the interface circuit 620 may be a transceiver or an input/output interface. The transceiver may include a transmitter and a receiver. The transmitter is configured to perform a sending operation, and the receiver is configured to perform a receiving operation. The input/output interface may include an input interface and an output interface. The input interface is configured to perform a receiving operation, and the output interface is configured to perform a sending operation. Optionally, the communication apparatus 600 may further include a memory 630, configured to: store instructions executed by the processor 610, store input data required for running the instructions by the processor 610, or store data generated after the processor 610 runs the instructions.

When the communication apparatus 600 is configured to implement the method shown in FIG. 6, the processor 610 may be configured to implement a function of the processing unit 510, and the interface circuit 620 is configured to implement a function of the transceiver unit 520.

When the communication apparatus is a chip used in a terminal device, the chip of the terminal device implements a function of the terminal device in the foregoing method embodiments. The chip of the terminal device receives information from another module (for example, a radio frequency module or an antenna) in the terminal device, and the information is sent by a network device to the terminal device; or the chip of the terminal device sends information to another module (for example, a radio frequency module or an antenna) in the terminal device, and the information is sent by the terminal device to a network device.

When the communication apparatus is a module used in a network device, the module of the network device implements a function of the network device in the foregoing method embodiments. The module of the network device receives information from another module (for example, a radio frequency module or an antenna) in the network device, and the information is sent by the terminal to the network device; or the module of the network device sends information to another module (for example, a radio frequency module or an antenna) in the network device, and the information is sent by the network device to the terminal. The module of the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

Some or all of operations and functions performed by the terminal device described in the foregoing method embodiments of this application, or some or all of operations and functions performed by the network device may be completed via a chip or an integrated circuit.

To implement functions of the communication apparatus in FIG. 5 or FIG. 6, an embodiment of this application further provides a chip, including a processor, configured to support the communication apparatus in implementing the functions of the terminal or the network device in the foregoing method embodiments. In a possible design, the chip is connected to a memory or the chip includes the memory, and the memory is configured to store program instructions and data that are required by the communication apparatus.

An embodiment of this application provides a computer-readable storage medium. The computer-readable storage medium stores a computer program, and the computer program includes instructions used for performing the foregoing method embodiments.

An embodiment of this application provides a computer program product including instructions. When the computer program product runs on a computer, the foregoing method embodiments are implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well known in the art. For example, the storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in a base station or a terminal as discrete components.

All or some of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer program or instructions are loaded and executed on a computer, the procedure or functions according to embodiments of this application are all or partially implemented. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, if there is no special description or logic conflict, terms and/or descriptions between different embodiments are consistent and may be mutually referenced, and technical features in different embodiments may be combined to form a new embodiment based on an internal logical relationship of the different embodiments.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural.

It may be understood that various numbers in embodiments of this application are merely used for differentiation for ease of descriptions, and are not used to limit the scope of embodiments of this application. Sequence numbers of the foregoing processes do not mean execution sequences. The execution sequences of the processes should be determined based on functions and internal logic of the processes.

## Claims

1. A communication method, comprising:
receiving, by a terminal device, first information, wherein the first information indicates to activate a first transmission configuration indicator TCI state of a target cell and indicates whether to change a serving cell; and
activating, by the terminal device, the first TCI state of the target cell based on the first information, and determining, based on the first information, whether to change the serving cell.

2. The method according to claim 1, wherein the first information is media access control control element MAC CE signaling, the MAC CE signaling comprises a first field, and the first field indicates whether to change the serving cell.

3. The method according to claim 2, wherein the MAC CE signaling further comprises a first serving cell identifier field, and the first serving cell identifier field indicates the target cell.

4. The method according to claim 2, wherein the MAC CE signaling further comprises a second serving cell identifier field, and the second serving cell identifier field corresponds to the serving cell; and the MAC CE signaling further comprises a second field, and the second field indicates the target cell.

5. The method according to claim 1, wherein the first information is a fourth field, and the fourth field is a field in MAC CE signaling or a field in downlink control information DCI; and
the determining, by the terminal device based on the first information, whether to change the serving cell comprises: when a value of the fourth field is a third value, determining to change the serving cell; or when a value of the fourth field is a fourth value, determining not to change the serving cell.

6. The method according to claim 1, wherein the first information is a first TCI state identifier;
and when the first TCI state identifier is of a first value, the first information indicates to change the serving cell; or when the first TCI state identifier is of a second value, the first information indicates not to change the serving cell.

7. The method according to any one of claims 2 to 5, wherein the MAC CE signaling further comprises a timing indication field; and the timing indication field indicates an identifier of a known timing advance group, and the timing advance group is used by the terminal device to determine uplink timing after the terminal device is handed over to the target cell; the timing indication field indicates a timing advance TA value, and the TA value is used by the terminal device to determine uplink timing after the terminal device is handed over to the target cell; or the timing indication field indicates an offset of a timing advance TA, and the offset of the TA is used by the terminal device to determine uplink timing based on a timing advance of a current cell or a TA of the target cell after the terminal device is handed over to the target cell.

8. The method according to claim 5, wherein the DCI further comprises a timing indication field; and the timing indication field indicates an identifier of a known timing advance group, and the timing advance group is used by the terminal device to determine uplink timing after the terminal device is handed over to the target cell; the timing indication field indicates a timing advance TA value, and the TA value is used by the terminal device to determine uplink timing after the terminal device is handed over to the target cell; or the timing indication field indicates an offset of a timing advance TA, and the offset of the TA is used by the terminal device to determine uplink timing based on a timing advance of a current cell or a TA of the target cell after the terminal device is handed over to the target cell.

9. The method according to any one of claims 1 to 8, wherein before the receiving, by a terminal device, first information, the method further comprises:
receiving, by the terminal device, second information, wherein the second information comprises configuration information of one or more candidate target cells, and the configuration information comprises one or more of the following information: a cell radio network temporary identifier C-RNTI, a TCI state configuration, a synchronization broadcast signal block SSB receiving configuration, a random access channel RACH configuration, or serving cell configuration information.

10. A communication method, comprising:
generating, by a network device, first information, wherein the first information indicates to activate a first transmission configuration indicator TCI state of a target cell and indicates whether to change a serving cell; and
sending, by the network device, the first information to a terminal device.

11. The method according to claim 10, wherein the first information is media access control control element MAC CE signaling, the MAC CE signaling comprises a first field, and the first field indicates whether to change the serving cell.

12. The method according to claim 11, wherein the MAC CE signaling further comprises a first serving cell identifier field, and the first serving cell identifier field indicates the target cell.

13. The method according to claim 11, wherein the MAC CE signaling further comprises a second serving cell identifier field, and the second serving cell identifier field corresponds to the serving cell; and the MAC CE signaling further comprises a second field, and the second field indicates the target cell.

14. The method according to claim 10, wherein the first information is a fourth field, and the fourth field is a field in MAC CE signaling or a field in downlink control information DCI; and
the determining, based on the first information, whether to change the serving cell comprises:
when a value of the fourth field is a third value, determining to change the serving cell; or when a value of the fourth field is a fourth value, determining not to change the serving cell.

15. The method according to claim 10, wherein the first information is a first TCI state identifier; and when the first TCI state identifier is of a first value, the first information indicates to change the serving cell; or when the first TCI state identifier is of a second value, the first information indicates not to change the serving cell.

16. The method according to any one of claims 10 to 14, wherein the MAC CE signaling further comprises a timing indication field; and the timing indication field indicates an identifier of a known timing advance group, and the timing advance group is used by the terminal device to determine uplink timing after the terminal device is handed over to the target cell; the timing indication field indicates a timing advance TA value, and the TA value is used by the terminal device to determine uplink timing after the terminal device is handed over to the target cell; or the timing indication field indicates an offset of a timing advance TA, and the offset of the TA is used by the terminal device to determine uplink timing based on a timing advance of a current cell or a TA of the target cell after the terminal device is handed over to the target cell.

17. The method according to claim 14, wherein the DCI further comprises a timing indication field; and the timing indication field indicates an identifier of a known timing advance group, and the timing advance group is used by the terminal device to determine uplink timing after the terminal device is handed over to the target cell; the timing indication field indicates a timing advance TA value, and the TA value is used by the terminal device to determine uplink timing after the terminal device is handed over to the target cell; or the timing indication field indicates an offset of a timing advance TA, and the offset of the TA is used by the terminal device to determine uplink timing based on a timing advance of a current cell or a TA of the target cell after the terminal device is handed over to the target cell.

18. The method according to any one of claims 10 to 17, wherein before the sending the first information, the method further comprises:
sending second information, wherein the second information comprises configuration information of one or more candidate target cells, and the configuration information comprises one or more of the following information: a cell radio network temporary identifier C-RNTI, a TCI state configuration, a synchronization broadcast signal block SSB receiving configuration, a random access channel RACH configuration, or serving cell configuration information.

19. A communication apparatus, comprising a transceiver unit and a processing unit, wherein the transceiver unit is configured to receive first information, wherein the first information indicates to activate a first transmission configuration indicator TCI state of a target cell and indicates whether to change a serving cell; and
the processing unit is configured to: activate the first TCI state of the target cell based on the first information, and determine, based on the first information, whether to change the serving cell.

20. The communication apparatus according to claim 19, wherein the first information is media access control control element MAC CE signaling, the MAC CE signaling comprises a first field, and the first field indicates whether to change the serving cell.

21. The communication apparatus according to claim 20, wherein the MAC CE signaling further comprises a first serving cell identifier field, and the first serving cell identifier field indicates the target cell.

22. The communication apparatus according to claim 20, wherein the MAC CE signaling further comprises a second serving cell identifier field, and the second serving cell identifier field corresponds to the serving cell; and the MAC CE signaling further comprises a second field, and the second field indicates the target cell.

23. The communication apparatus according to claim 19, wherein the first information is a fourth field, and the fourth field is a field in MAC CE signaling or a field in downlink control information DCI; and
when determining, based on the first information, whether to change the serving cell, the processing unit is specifically configured to: when a value of the fourth field is a third value, determine to change the serving cell; or when a value of the fourth field is a fourth value, determine not to change the serving cell.

24. The communication apparatus according to claim 19, wherein the first information is a first TCI state identifier; and when the first TCI state identifier is of a first value, the first information indicates to change the serving cell; or when the first TCI state identifier is of a second value, the first information indicates not to change the serving cell.

25. The communication apparatus according to any one of claims 20 to 23, wherein the MAC CE signaling further comprises a timing indication field; and the timing indication field indicates an identifier of a known timing advance group, and the timing advance group is used by the communication apparatus to determine uplink timing after the communication apparatus is handed over to the target cell; the timing indication field indicates a timing advance TA value, and the TA value is used by the communication apparatus to determine uplink timing after the communication apparatus is handed over to the target cell; or the timing indication field indicates an offset of a timing advance TA, and the offset of the TA is used by the communication apparatus to determine uplink timing based on a timing advance of a current cell or a TA of the target cell after the communication apparatus is handed over to the target cell.

26. The communication apparatus according to claim 23, wherein the DCI further comprises a timing indication field; and the timing indication field indicates an identifier of a known timing advance group, and the timing advance group is used by the communication apparatus to determine uplink timing after the communication apparatus is handed over to the target cell; the timing indication field indicates a timing advance TA value, and the TA value is used by the communication apparatus to determine uplink timing after the communication apparatus is handed over to the target cell; or the timing indication field indicates an offset of a timing advance TA, and the offset of the TA is used by the communication apparatus to determine uplink timing based on a timing advance of a current cell or a TA of the target cell after the communication apparatus is handed over to the target cell.

27. The communication apparatus according to any one of claims 19 to 26, wherein the transceiver unit is further configured to: before receiving the first information, receive second information, wherein the second information comprises configuration information of one or more candidate target cells, and the configuration information comprises one or more of the following information: a cell radio network temporary identifier C-RNTI, a TCI state configuration, a synchronization broadcast signal block SSB receiving configuration, a random access channel RACH configuration, or serving cell configuration information.

28. A communication apparatus, comprising: a processing unit and a transceiver unit, wherein the processing unit is configured to generate first information, wherein the first information indicates to activate a first transmission configuration indicator TCI state of a target cell and indicates whether to change a serving cell; and
the transceiver unit is configured to send the first information to the terminal device.

29. The communication apparatus according to claim 28, wherein the first information is media access control control element MAC CE signaling, the MAC CE signaling comprises a first field, and the first field indicates whether to change the serving cell.

30. The communication apparatus according to claim 29, wherein the MAC CE signaling further comprises a first serving cell identifier field, and the first serving cell identifier field indicates the target cell.

31. The communication apparatus according to claim 29, wherein the MAC CE signaling further comprises a second serving cell identifier field, and the second serving cell identifier field corresponds to the serving cell; and the MAC CE signaling further comprises a second field, and the second field indicates the target cell.

32. The communication apparatus according to claim 28, wherein the first information is a fourth field, and the fourth field is a field in MAC CE signaling or a field in downlink control information DCI; and
when determining, based on the first information, whether to change the serving cell, the processing unit is specifically configured to: when a value of the fourth field is a third value, determine to change the serving cell; or when a value of the fourth field is a fourth value, determine not to change the serving cell.

33. The communication apparatus according to claim 28, wherein the first information is a first TCI state identifier; and when the first TCI state identifier is of a first value, the first information indicates to change the serving cell; or when the first TCI state identifier is of a second value, the first information indicates not to change the serving cell.

34. The communication apparatus according to any one of claims 29 to 32, wherein the MAC CE signaling further comprises a timing indication field; and the timing indication field indicates an identifier of a known timing advance group, and the timing advance group is used by the terminal device to determine uplink timing after the terminal device is handed over to the target cell; the timing indication field indicates a timing advance TA value, and the TA value is used by the terminal device to determine uplink timing after the terminal device is handed over to the target cell; or the timing indication field indicates an offset of a timing advance TA, and the offset of the TA is used by the terminal device to determine uplink timing based on a timing advance of a current cell or a TA of the target cell after the terminal device is handed over to the target cell.

35. The communication apparatus according to claim 32, wherein the DCI further comprises a timing indication field; and the timing indication field indicates an identifier of a known timing advance group, and the timing advance group is used by the terminal device to determine uplink timing after the terminal device is handed over to the target cell; the timing indication field indicates a timing advance TA value, and the TA value is used by the terminal device to determine uplink timing after the terminal device is handed over to the target cell; or the timing indication field indicates an offset of a timing advance TA, and the offset of the TA is used by the terminal device to determine uplink timing based on a timing advance of a current cell or a TA of the target cell after the terminal device is handed over to the target cell.

36. The communication apparatus according to any one of claims 28 to 35, wherein the transceiver unit is further configured to: before sending the first information, send second information, wherein the second information comprises configuration information of one or more candidate target cells, and the configuration information comprises one or more of the following information: a cell radio network temporary identifier C-RNTI, a TCI state configuration, a synchronization broadcast signal block SSB receiving configuration, a random access channel RACH configuration, or serving cell configuration information.

37. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 9 via a logic circuit or by executing code instructions, or the processor is configured to implement the method according to any one of claims 10 to 18 via a logic circuit or by executing code instructions.

38. The apparatus according to claim 37, further comprising a memory, wherein the memory stores a computer program or instructions run by the processor.

39. A computer-readable storage medium, wherein the storage medium stores a computer program or instructions; and when the computer program or instructions are executed by a communication apparatus, the method according to any one of claims 1 to 9 or the method according to any one of claims 10 to 18 is implemented.

40. A computer program, wherein when the computer program is run on a computer, the computer is enabled to perform the method according to any one of claims 1 to 9, or the computer is enabled to perform the method according to any one of claims 10 to 18.

41. A chip, wherein the chip comprises a processor, and the processor is configured to execute a computer program or instructions stored in a memory, to implement the method according to any one of claims 1 to 9, or implement the method according to any one of claims 10 to 18.
